Europäisches Patentamt

European Patent Office

Office européen des brevets

(11) Publication number: **0 492 486 A2**

## EUROPEAN PATENT APPLICATION

(21) Application number: **91121895.6**

(22) Date of filing: **20.12.91**

(51) Int. Cl.5: **H04N 7/167**

(30) Priority: **21.12.90 IT 2849790**

(43) Date of publication of application:
**01.07.92 Bulletin 92/27**

(84) Designated Contracting States:
**BE CH DE ES FR GB LI NL SE**

(71) Applicant: **ALCATEL ITALIA S.p.A.**
**Via Monte Rosa 15**
**I-20149 Milano(IT)**

(72) Inventor: **Cucchi, Silvio**
**Via S. Ivenzio, 9**
**I-20090 Gaggiano (MI)(IT)**
Inventor: **Parladori, Giorgio**
**Stradone Porta Palio, 36**
**I-37122 Verona(IT)**
Inventor: **Maestri, Roberto**
**Via Nazario Sauro, 24**
**Castel S. Giovanni (PC)(IT)**

(74) Representative: **Strehl, Schübel-Hopf,**
**Groening**
**Maximilianstrasse 54 Postfach 22 14 55**
**W-8000 München 22(DE)**

(54) **Systems and devices for the cryptography of digital signals.**

(57) A system for managing safety characteristics in an audio or video service network is particularly adapted to allow only authorized receivers to receive transmitted signals correctly. To this end, the signals to be transmitted in digital form are encoded, the digital information leaving the encoding stage is cryptographed in using a key k, and both the key and the information referring to the decoding algorithm are sent to the authorized receivers in secret form. At the receiving side, the key k received from the transmitter is decoded and then, the digital signal received is decoded in using the specified algorithm and the decoded key k.

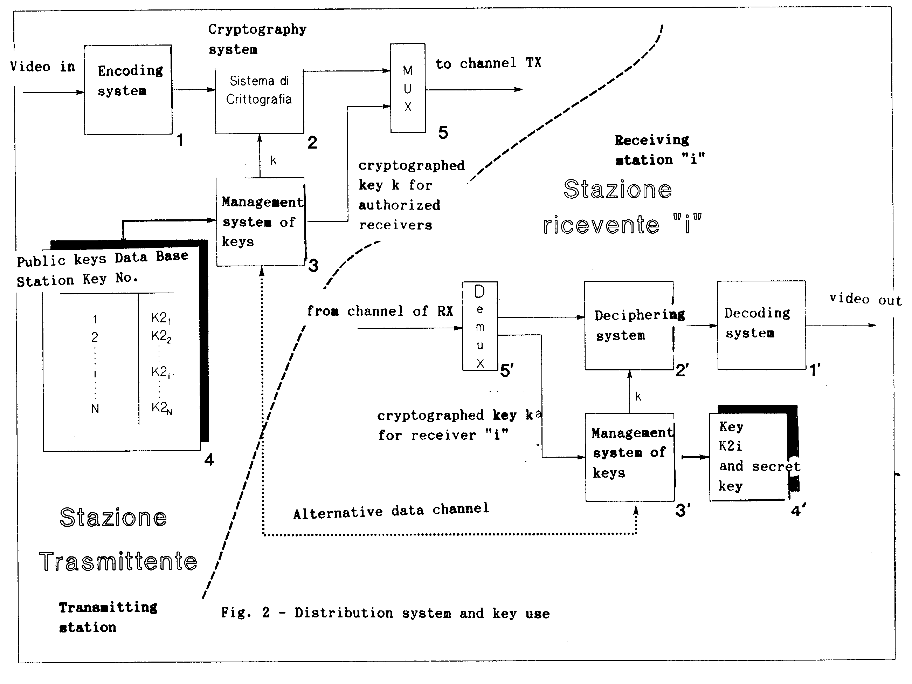

Fig. 2 - Distribution system and key use

The present invention refers to a system for the management of the safety characteristics in an audio and video service network, in particular it refers to a system by which the sole authorized receivers are allowed to obtain a right reception. It is known the necessity of transmitting the television signal in a cryptographic form. Actually technics processing the analog signals are usually used. Further the cryptographic methods in the field of the data transmission are known. With the coming of the numerical transmission of the television signal, it is advantageously possible to apply the digital cryptographic technics to the video data, when these data are suitably designed.

The present invention refers to a system for protecting the audio and video signal transmission against the unauthorized reception. The fulfilment of this system uses suitable technics of cryptography and management access keys described in the following.

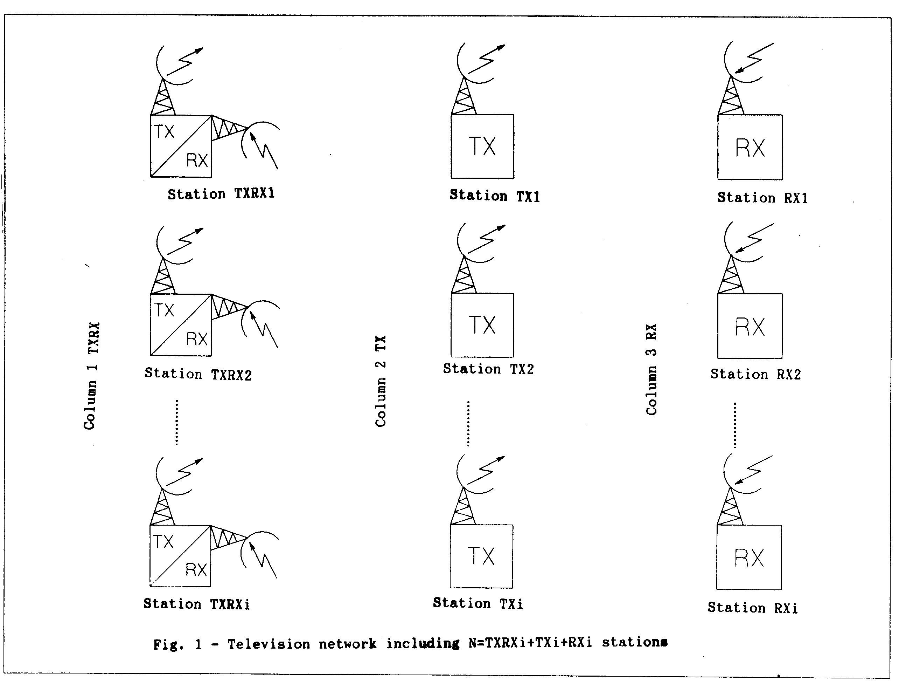

Reference is made to Figure 1.

In a hypothetic television network it is possible to identify a finite number N of stations, some of which can only transmit (TX1, TX2, TXi in the second column TX), other stations can only receive (RX1, RX2, RXi in the third column RX), and other stations can transmit and receive (TXRX1, TXRX2, TXRXi in the first column TXRX). The system shall allow the transmitting stations TX to select a subassembly of authorized reception stations RX', so that these stations are allowed to receive correctly the transmission; all the other stations RX-RX', even if they can receive the signal, are not able to decode it correctly.

An aim of this invention is to provide a system for the management of the safety characteristics in an audio and video service network, in particular a system by which the sole authorized receivers are allowed to obtain a correct reception.

According to the invention, the system works as follows:

1. all the stations are capable to cryptograph the information using a key **k** and a suitable algorithm;

2. all the transmitting stations are allowed to transmit in secret form the key **k** to the stations selected for the reception and the information of the used cryptography algorithm;

3. all receiving stations are allowed to interpret correctly the key **k**, if it is transmitted;

4. all receiving stations are allowed to use the corresponding decoding algorithm using the key **k**.

The main characteristics of the system according to the invention are specified in claim 1. A preferred and therefore advantageous embodiment of the invention foresees the transmission of the key **k** to the authorized receivers using the public key technics (see e.g. "New Direction in Cryptography, IEEE Trans. on Information Theory, No. 6, November 1976). The implementation of this mechanism requires that:

- the receivers are capable to communicate their public key **(k2)** to all transmitters;
- the transmitters shall have an updated table that holds the receiver-public key association **(i-k2)**
- the transmitters must be enabled to transmit the key **k** that they shall use to cryptograph the signal before starting the transmission. The transmission of the key **k** shall be made singularly to each authorized receiver by encoding **k** with the corresponding key **k2** using a suitable transmission channel.

What above said is made by the system represented in Figure 2, that includes:
in transmission:
- the block 1 for signal encoding,
- the block 2 for ciphering data according to the key **k**,
- the block 3 to provide at the output the key **k** ciphered by the key **k2i**,
- the block 4 holding the table of the receiver **i** - key **k2i** correspondances and
- the block 5 for combining the ciphered data with the ciphered key **k**;
  in reception:
- the block 5' for distributing the cryptographed data and keys to blocks 2' and 3', respectively;
- the block 4' holding the deciphering code of the key **k2i**,
- the block 3' for carrying out the decoding of the key **k**,
- the block 2' for deciphering data and
- the block 1' for decoding data.

According to a further feature of the invention the cryptography algorithm can be selected between the synchronous system DES (see: Federal Information Processing Standards Publication 46, 1977 January 15, "Specification for Data Encryption standard") and/or a synchronous scramblering system.

According to another feature of the invention the audio and/or video signals shall be preferably written in encoded digital form and organized in a proper frame and packet. In the inside of this frame all information that are deemed useful for the management of the cryptography system are advantageously transmitted according to a suitable protocol. In particular the information having the greatest importance among the others can be identified as:

- the couples identifying the receivers and the keys **k** cryptographed by the public key **k2**;
- a signal identifying the instant of the start of the use of a previously transmitted key **k**;
- a signal informing if the transmission is cryptographed or not cryptographed;
- a signal indicating the used cryptography algorithm.

The invention has been described for illustrative clarity sake with reference to the embodiment represented in the figures. The invention is however susceptible of modifications, variants, substitutions and the like, which being within the reach of a skilled technician, fall naturally included within the spirit and scope of the inventive concept.

## Claims

1. A system for the management of the safety characteristics in a audio and video service network, in particular for allowing to the sole authorized receivers to get a right reception of the transmitted signals, characterized in that it includes at least the following stages:

   in transmission:

   1a to encode the signals to be transmitted in digital form;

   1b to cryptograph the digital information outgoing from said encoding stage using a key **k**

   1c to send said key **k** and the information referring to the decoding algorithm in secret form to the authorized receivers; in reception:

   1d to decode the above mentioned key **k** sent from the transmitter;

   1e to decode said digital signal received using the specified algorithm and the key **k** of 1c and,

   1f to decode the received signals.

2. A system according to claim 1, in which it is used the public key technics to carry out the stages specified in paragraphs 1c and 1d.

3. A system according to claim 1, characterized in that it is used the DES algorithm and contemporaneously or as alternative solution it is used the synchronous scramblering technics for implementing the stages of paragraphs 1b and 1c.

4. A system according to claim 1, in which a slow channel, preferably inserted in the transmission frame, and a protocol for the management of the described mechanisms are used.

5. A system substantially according to what described and represented.

Column 1 TXRX

Station TXRX1

Station TXRX2

Station TXRXi

Column 2 TX

Station TX1

Station TX2

Station TXi

Column 3 RX

Station RX1

Station RX2

Station RXi

Fig. 1 - Television network including N=TXRXi+TXi+RXi stations

Fig. 2 - Distribution system and key use

EP 0 492 486 A2